# EUROPÄISCHE PATENTANMELDUNG

(11) **EP 4 516 575 A1**
(43) Veröffentlichungstag der Anmeldung: **05.03.2025**
(21) Anmeldenummer: 24187089.8
(22) Anmeldetag: 08.07.2024
(51) Int. Cl.: B60L 53/37, B60L 53/35

(54) **AUTOMATISCHE LADEVORRICHTUNG ZUM LADEN EINES ELEKTROFAHRZEUGS**

(30) Priorität: 31.08.2023 DE 102023208391
(71) Anmelder: Siemens Aktiengesellschaft, 80333 München (DE)
(72) Erfinder: Kummeth, Peter, 91074 Herzogenaurach (DE); Perras, Stefan, 82223 Eichenau (DE); Richter, Johannes, 90768 Fürth (DE)
(74) Vertreter: Siemens Patent Attorneys

(57) **Zusammenfassung**

Die Erfindung betrifft eine Ladevorrichtung (2) zum Laden eines Elektrofahrzeugs (1) mit elektrischer Energie mittels eines Ladekabels (17) mit einem endseitig angeordneten Ladestecker (6), der mit einem Ladeanschluss (5) an dem zu ladenden Elektrofahrzeug (1) verbindbar ist. Die Ladevorrichtung (2) ist gekennzeichnet durch eine Steckerhalterung (8), die eingerichtet ist, den Ladestecker (6) automatisch mit dem Ladeanschluss (5) zu verbinden oder automatisch zu lösen.

## Beschreibung

Die Erfindung betrifft eine Ladevorrichtung zum Laden eines Elektrofahrzeugs mit elektrischer Energie mittels eines Ladekabels mit einem endseitig angeordneten Ladestecker, der mit einem Ladeanschluss an dem zu ladenden Elektrofahrzeug verbindbar ist.

Elektrofahrzeuge (auch elektrisch betriebene Fahrzeuge genannt) ersetzen in zunehmendem Maße Kraftfahrzeuge mit Verbrennungsmotoren. Es ist zu erwarten, dass in Zukunft nicht nur die Zahl elektrischer Fahrzeuge mit Fahrer, sondern auch die Anzahl autonom fahrender elektrischer Fahrzeuge zunimmt. Erste Anwendungsfälle werden beispielsweise autonom fahrende Taxi- und Shuttle-Fahrzeuge sein. Die Auslastung dieser autonomen Fahrzeuge ist ein entscheidender Faktor für die Profitabilität der Dienste, so dass Stillstandzeiten durch Aufladen möglichst minimiert werden müssen. Dies erfolgt durch entsprechende Schnellladestationen mit Gleichstrom oder Wechselstrom. Bei einem derzeitigen, manuellen Ladevorgang eines Elektrofahrzeugs führt eine Person den Ladevorgang durch, indem die Person ein Ladekabel oder einen Ladestecker der Schnellladestation mit einem Ladeanschluss an dem Elektrofahrzeug verbindet. Mögliche Bewegungen des Fahrzeugs während des Ladevorgangs, zum Beispiel durch einsteigende oder aussteigende Personen oder durch das Beladen oder Entladen von Nutzlast, werden durch das flexible Ladekabel ausgeglichen.

Der Erfindung liegt die Aufgabe zugrunde, zum Laden eines, insbesondere autonom fahrenden, Elektrofahrzeugs eine verbesserte Ladevorrichtung bereitzustellen.

Die Aufgabe wird erfindungsgemäß mit einer Ladevorrichtung mit den Merkmalen des Anspruchs 1 gelöst.

Vorteilhafte Ausgestaltungen der Erfindung sind Gegenstand der Unteransprüche.

Die erfindungsgemäße Ladevorrichtung zum Laden eines Elektrofahrzeugs mit elektrischer Energie, mittels eines Ladekabels mit einem endseitig angeordneten Ladestecker, der mit einem Ladeanschluss an dem zu ladenden Elektrofahrzeug verbindbar ist, ist gekennzeichnet durch eine Steckerhalterung, die eingerichtet ist, den Ladestecker automatisch mit dem Ladeanschluss zu verbinden oder im verbundenen Zustand automatisch von dem Ladeanschluss zu lösen, insbesondere abzuziehen oder zu entkoppeln.

Die mit der Erfindung erzielten Vorteile bestehen insbesondere darin, dass eine Ladevorrichtung, insbesondere eine autonome Schnellladevorrichtung, mit einer solchen zusätzlichen Steckerhalterung ein automatisiertes Laden des Elektrofahrzeugs ermöglicht. Insbesondere ermöglicht die Erfindung, dass der Ladestecker automatisch zum Laden mit einem Ladeanschluss verbunden wird, während eines Ladens automatisch von der Steckerhalterung freigegeben oder losgelassen wird und nach Beendigung des Ladevorgangs wieder automatisch von der Steckerhalterung aufgefunden und aufgenommen, insbesondere gegriffen, wird und vom Ladeanschluss gelöst, insbesondere abgezogen, wird.

Unter einer Ladevorrichtung wird insbesondere eine Ladestation, zum Beispiel eine Schnellladestation, verstanden. Die Ladestation kann einerseits mit einem Stromnetz und andererseits mit dem Ladekabel verbunden sein. Zum automatischen Verbinden und Lösen des Ladesteckers von dem Ladeanschluss am Elektrofahrzeug ist die Ladestation in mindestens einer, bevorzugt in zwei, drei oder mehreren Raumrichtungen verstellbar ausgebildet.

In einer möglichen Ausführungsform ist die Steckerhalterung eingerichtet, einen nicht gesteckten Ladestecker an der Steckerhalterung zu halten. Darüber hinaus kann die Steckerhalterung eingerichtet sein, den Ladestecker beim Verbinden mit dem Ladeanschluss an der Steckerhalterung zu halten.

Ferner kann die Steckerhalterung eingerichtet sein, nach einem Verbinden des Ladesteckers mit dem Ladeanschluss den gesteckten Ladestecker freizugeben, insbesondere loszulassen. Somit ist der Ladestecker von der Steckerhalterung entkoppelt und während des Ladens in diesem Ladeanschluss gesteckt gehalten. Der Ladestecker ist im freigegebenen und gesteckten Zustand unter Umständen über das flexible Ladekabel mit der Ladevorrichtung verbunden.

In einer weiteren Ausführungsform kann die Steckerhalterung eingerichtet sein, den am Ladeanschluss gesteckten Ladestecker sowohl aufzufinden als auch einzufangen, zu greifen und vom Ladeanschluss zu lösen. Insbesondere ist die Steckerhalterung eingerichtet, den gesteckten Ladestecker automatisch aufzufinden, einzufangen, zu greifen und vom Ladeanschluss zu lösen.

Des Weiteren kann die Steckerhalterung eine Koppeleinrichtung umfassen, die eingerichtet ist, den Ladestecker lösbar zu halten und/oder zu fixieren. Beispielsweise kann die Koppeleinrichtung eingerichtet sein, den Ladestecker mittels einer Formschlussverbindung und/oder einer Kraftschlussverbindung zu halten. Beispielsweise kann der Ladestecker an der Koppeleinrichtung geklemmt, gespannt und/oder magnetisch gehalten sein. Dazu kann die Koppeleinrichtung zum Beispiel als eine Klemmeinheit, Spanneinheit oder eine Magneteinheit ausgebildet sein. Insbesondere umfassen die Koppeleinrichtung und der Ladestecker zueinander korrespondierende Elemente, insbesondere Klemmelemente, Spannelemente und/oder Magnetelemente.

In einer weiteren möglichen Ausführungsform kann die Koppeleinrichtung als ein Einzugmechanismus, insbesondere ein Fangseilzugmechanismus, ausgebildet sein, der beispielsweise einen Seilzug, an dem einerseits der Ladestecker lose und flexibel gehalten ist und der andererseits an der Koppeleinrichtung einziehbar gelagert ist, und eine Zentriereinheit, insbesondere eine zentrierte und formschlüssige Fangeinrichtung, insbesondere einen Fangtrichter, eine Fangschale oder dergleichen, aufweist. Durch den Seilzug ist sichergestellt, dass der Ladestecker verliersicher gehalten ist. Der Seilzug bietet Flexibilität. Die Zentriereinheit richtet den Ladestecker beim Aufnehmen aus und bewegt diesen in die Zentriereinheit hinein und hält diesen ausgerichtet und formschlüssig und/oder kraftschlüssig in der Zentriereinheit, zum Beispiel in einer entsprechenden Aufnahme, auch Fangaufnahme genannt.

In einer weiteren Ausführungsform kann die Steckerhalterung eine Überwachungseinheit umfassen, die eingerichtet ist, einen gesteckten Ladestecker hinsichtlich seiner Steckposition zu überwachen und/oder aufzufinden. Beispielsweise kann die Überwachungseinheit mindestens eine Kamera, eine funkbasierte Überwachungseinheit, zum Beispiel eine Nahbereichsfunklokalisierungseinheit auf Ultra-Breitband-Basis (auch kurz UWB Basis mit UWB = Ultra-Wideband), oder eine Näherungssensoreinheit umfassen.

Zum Beispiel kann zum Auffinden oder Wiederauffinden des Ladesteckers als Überwachungseinheit eine Kamera oder ein Kamerasystem genutzt werden. Auch können zwei separate Überwachungseinheiten vorgesehen sein, wobei eine Überwachungseinheit zum Auffinden eines Ladeanschlusses bei einem Anschließen an ein zu ladendes Elektrofahrzeug und eine weitere Überwachungseinheit zum Nachverfolgen einer möglichen Bewegung des gesteckten Ladesteckers beim Laden des Elektrofahrzeugs vorgesehen sind.

Die Überwachungseinheit zum Auffinden des Ladeanschlusses kann aufgrund der größeren Verstellbewegung insbesondere einen größeren Erfassungsbereich als die weitere Überwachungseinheit zum Nachverfolgen der Bewegung des gesteckten Ladesteckers aufweisen.

Die Überwachungseinheiten können unterschiedlicher Art sein. So kann die Überwachungseinheit zum Auffinden des Ladeanschlusses und somit zur Überwachung einer größeren Strecke als Kamera ausgebildet sein. Die Überwachungseinheit zur Überwachung der Nachverfolgung der Bewegungen des gesteckten Ladesteckers und somit zur Überwachung von kurzen Strecken kann beispielsweise ein Näherungssensor, insbesondere ein kapazitiver Näherungssensor, ein induktiver Näherungssensor, eine funkbasierte Überwachungseinheit aber auch eine Kamera oder dergleichen, sein.

Zumindest eine Überwachungseinheit, insbesondere eine Kamera, kann zum Beispiel eine Form, eine Markierung oder ein Muster an dem Ladestecker selbst erfassen und erkennen. Zusätzlich oder alternativ kann eine weitere Überwachungseinheit, insbesondere eine Kamera, den Ladeanschluss an dem Fahrzeug erfassen und erkennen. Mittels eines Algorithmus werden beispielsweise bei einer Kamera als Überwachungseinheit Kamerabilder und optional deren Verzerrungen bestimmt und anhand derer werden die Steckposition des, insbesondere gesteckten, Ladesteckers oder die Anschlussposition eines freien Ladeanschlusses zum automatischen Verbinden des Ladesteckers mit dem freien Ladeanschluss ermittelt. Alternativ werden Sensorwerte von entsprechenden Sensoren erfasst und verwendet.

Die jeweilige Position, insbesondere die Steckposition und/oder die Anschlussposition, kann in Koordinaten umgewandelt werden, anhand welcher dann die Steckerhalterung zum automatischen Verbinden des Ladesteckers mit dem freien Ladeanschluss oder zum Auffinden und Lösen, insbesondere Abziehen, des gesteckten Ladesteckers von dem Ladeanschluss bewegt und ausgerichtet wird.

Hierzu kann die Ladevorrichtung eine Verstelleinrichtung, zum Beispiel Linear-Aktuatoren, Winkel-Aktuatoren, Drehgelenke und/oder Kugelgelenke, umfassen. Durch Ansteuern der Verstelleinrichtung, insbesondere der Linear-Aktuatoren, Winkel-Aktuatoren, Drehgelenke und/oder Kugelgelenke, kann die Steckerhalterung während eines Ladevorgangs den Ladestecker und seiner Position folgen (auch Feinverstellung genannt, die zum Nachfolgen einer Bewegung des gesteckten Ladesteckers während des Ladens des Elektrofahrzeugs vorgesehen ist).

Alternativ oder zusätzlich kann die Steckerhalterung mittels der Verstelleinrichtung vor einem Ladevorgang in Richtung des Ladeanschlusses bewegt und in Bezug auf den Ladeanschluss ausgerichtet werden (auch Grobverstellung genannt, die zum Auffinden der nicht genormten Position des Ladeanschlusses am Elektrofahrzeug vorgesehen ist).

Des Weiteren kann die Steckhalterung mittels der Verstelleinrichtung nach einem Ladevorgang in Richtung des Ladesteckers zu dessen Aufnahme bewegt und zum Lösen des Ladesteckers von dem Ladeanschluss wegbewegt werden (auch Zustellbewegung genannt).

Zur Verstellung der Steckhalterung mit oder ohne fixierten Ladestecker kann die Steckhalterung an einer beweglichen Einheit der Verstelleinrichtung angeordnet und befestigt sein. Optional kann die Steckhalterung selbst beweglich gelagert sein.

Mit anderen Worten: Die Verstelleinrichtung kann die Steckerhalterung entsprechend bewegen. Das Bewegen oder Verstellen der Steckerhalterung stellt sicher, dass bei Bewegungen des Elektrofahrzeugs während des Ladens des Elektrofahrzeugs die Steckerhalterung der Steckposition des Ladesteckers automatisch nachgeführt wird und/oder dass die Steckerhalterung mit dem nicht gesteckten, aber an der Steckerhalterung fixierten Ladestecker in Bezug auf den Ladeanschluss ausgerichtet werden kann.

Beim Beenden des Ladevorgangs kann der Ladestecker mittels der Koppeleinrichtung, zum Beispiel einer Spanneinheit oder dergleichen, aufgrund der automatischen Nachführung der Steckerhalterung positionsgetreu aufgenommen und an der Steckerhalterung gehalten und fixiert werden.

Insbesondere kann die Steckerhalterung zwischen einer Ausgangsposition und der Steckposition bewegbar ausgebildet sein. Beispielsweise ist die Steckerhalterung vor einem Laden in eine Ausgangsposition an der Ladevorrichtung gestellt. Zum Stecken des Ladesteckers in den Ladeanschluss des zu ladenden Elektrofahrzeugs kann die Steckerhalterung zunächst in Bezug auf den Ladeanschluss automatisch ausgerichtet werden und anschließend in die Steckposition zum automatischen Verbinden des Ladesteckers mit dem Ladeanschluss am Elektrofahrzeug gestellt werden. Nach Beendigung des Ladevorgangs und dem optionalen Wiederauffinden und Greifen sowie Lösen des gesteckten Ladesteckers von dem Ladeanschluss kann die Steckerhalterung in die Ausgangsposition zurückgestellt werden.

Durch eine solche Verstellbarkeit und Bewegbarkeit der Steckerhalterung im nicht gesteckten Zustand des Ladesteckers und somit im an der Steckerhalterung gehaltenen Zustand des Ladesteckers kann die Steckerhalterung frei bewegt werden. Ebenso kann durch das Lösen des Ladesteckers von der Steckerhalterung im gesteckten Zustand an dem Ladeanschluss das Elektrofahrzeug mit dem gesteckten Ladestecker aufgrund des flexiblen Ladekabels frei bewegt werden. Hierdurch können beispielsweise Bewegungen infolge von beispielsweise Beladen oder Entladen des Elektrofahrzeugs und/oder Einsteigen oder Aussteigen von Personen während des Ladevorgangs des Elektrofahrzeugs und bei gestecktem Ladestecker flexibel ausgeglichen werden. Insbesondere können durch das Freigeben des gesteckten Ladesteckers von der Steckerhalterung aus den geringen Bewegungen des Elektrofahrzeugs resultierende Kräfte, die auf die Kopplung vom gesteckten Ladestecker und Ladevorrichtung wirken, reduziert oder gar vermieden werden.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch in einer Ansicht von hinten ein Elektrofahrzeug an einer erfindungsgemäßen Ladevorrichtung,
- FIG 2: schematisch in perspektivischer Darstellung ein erstes Ausführungsbeispiel für die erfindungsgemäße Ladevorrichtung gemäß Figur 1,
- FIG 3: schematisch in perspektivischer Darstellung ein Beispiel für eine Steckerhalterung mit gehaltenem Ladestecker,
- FIG 4: in schematischer Darstellung ein weiteres Beispiel einer Steckerhalterung mit alternativer Koppeleinrichtung für den Ladestecker, der in gelöster Stellung/freigegebener Stellung in Bezug auf die Steckerhalterung steht,
- FIG 5: in schematischer Darstellung ein weiteres Beispiel einer Steckerhalterung mit einer weiteren alternativen Koppeleinrichtung für den Ladestecker, der in gelöster Stellung/freigegebener Stellung in Bezug auf die Steckerhalterung steht,
- FIG 6: schematisch in perspektivischer Darstellung die Steckerhalterung mit fixiertem Ladestecker,
- FIG 7: schematisch in perspektivischer Darstellung die Steckerhalterung mit gelöstem Ladestecker,
- FIIG 8: schematisch in perspektivischer Darstellung die Steckerhalterung mit freiem Ladestecker,
- FIG 9: schematisch in perspektivischer Darstellung die Steckerhalterung mit eingefangenem Ladestecker, und
- FIG 10: schematisch in perspektivischer Darstellung die Steckerhalterung mit wieder fixiertem Ladestecker.

Einander entsprechende Teile sind in den Figuren mit denselben Bezugszeichen versehen.

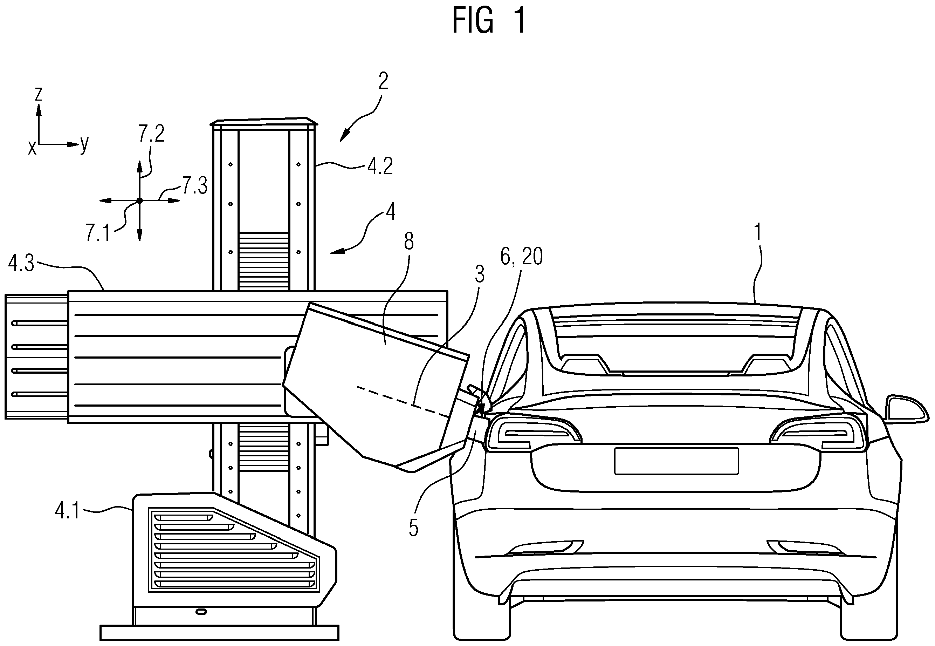

Figur 1 zeigt schematisch in einer Ansicht von hinten ein Elektrofahrzeug 1 an einer erfindungsgemäßen Ladevorrichtung 2.

Die Ladevorrichtung 2 ist als eine autonome Ladestation zum Laden des Elektrofahrzeugs 1 ausgebildet. Das Elektrofahrzeug 1 ist beispielsweise ein autonom fahrendes Elektrofahrzeug, das selbsttätig zum Laden an die Ladevorrichtung 2 heranfährt.

Die Ladevorrichtung 2, insbesondere die autonome Ladestation, umfasst zum flexiblen Heranführen eines Satzes 3 von Kabeln (im Weiteren kurz Kabelsatz 3 genannt) von einem nicht dargestellten Versorgungsanschluss oder Leistungsanschluss, insbesondere einen Erdanschluss, einer nahen oder entfernten Ladestation (nicht näher dargestellt) an einen Ladeanschluss 5 des Elektrofahrzeugs 1 eine Schleppkettenanordnung 4. Die Ladevorrichtung 2 mit der Schleppkettenanordnung 4 ist als ein Laderoboter ausgebildet, mittels welchem eine an der Schleppkettenanordnung 4 angeordnete Steckerhalterung 8 variabel, insbesondere in mehrere Raumrichtungen 7.1 bis 7.3, in Richtung des Ladeanschlusses 5 bewegt und/oder in Bezug auf den Ladeanschluss 5 ausgerichtet werden kann.

Das Elektrofahrzeug 1 umfasst als Ladeanschluss 5 zum Beispiel eine Ladesteckerbuchse. Der Kabelsatz 3 umfasst an seinem in Richtung des Elektrofahrzeugs 1 weisenden Ende einen Ladestecker 6, der zum Koppeln mit dem Ladeanschluss 5 ausgebildet ist. Der Ladestecker 6 ist in seiner Steckposition 20 im Ladeanschluss 5 gesteckt dargestellt.

Die Schleppkettenanordnung 4 (auch Kabelführungsanordnung genannt) ist insbesondere eingerichtet, den Kabelsatz 3 flexibel in Richtung des Ladeanschlusses 5 in mindestens eine Raumrichtung 7.1 bis 7.3 (auch Transportierrichtung genannt) zu bewegen oder zu transportieren und in Bezug auf den Ladeanschluss 5 des Elektrofahrzeugs 1 auszurichten.

Durch eine solche Ladevorrichtung 2 kann der Kabelsatz 3 flexibel in eine erste Raumrichtung 7.1 in Längsrichtung x, in eine zweite Raumrichtung 7.2 in Hochrichtung z und/oder in eine dritte Raumrichtung 7.3 in Querrichtung y über eine entsprechende Länge oder eine entsprechende Strecke hinweg bis zu dem Ladeanschluss 5 des an die Ladevorrichtung 2 autonom herangefahrenen Elektrofahrzeugs 1 bewegt oder transportiert werden.

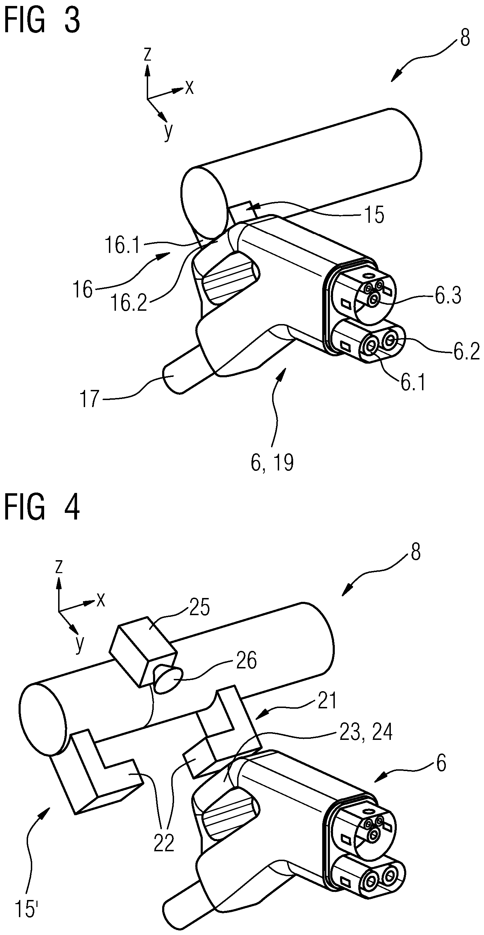

Die Ladevorrichtung 2 ist derart eingerichtet, dass der endseitig an dem Kabelsatz 3 angeordnete Ladestecker 6 automatisch an die Position des Ladeanschlusses 5 des Elektrofahrzeugs 1 bewegt und dort in Bezug auf den Ladeanschluss 5 ausgerichtet und in den Ladeanschluss 5 eingeführt, insbesondere eingesteckt, wird. Nach Beendigung des Ladevorgangs kann der Ladestecker 6 mittels der Ladevorrichtung 2 wieder automatisch aus dem Ladeanschluss 5 gelöst, insbesondere gezogen oder entfernt, werden. Hierzu umfasst die Ladevorrichtung 2 eine Steckerhalterung 8, die nachfolgend näher in den Figuren 3 bis 10 beschrieben wird.

Die Ladevorrichtung 2 ist universell für verschiedene Elektrofahrzeuge 1 einsetzbar, da der Kabelsatz 3 mit dem Ladestecker 6 an die jeweilige, üblicherweise nicht genormte Position des Ladeanschlusses 5 an Elektrofahrzeugen 1 transportiert werden kann. Beispielsweise kann der Ladeanschluss 5 am Elektrofahrzeug 1 vorne, an der Seite oder hinten vorgesehen sein. Die als Laderoboter ausgebildete autonome Ladevorrichtung 2 ist insbesondere eingerichtet, den Ladestecker 6 automatisch, beispielsweise indirekt mittels der Schleppkettenanordnung 4, in Richtung eines identifizierten Ladeanschlusses 5 eines zu ladenden Elektrofahrzeugs 1 zu bewegen, in Bezug auf diesen Ladeanschluss 5 auszurichten und in diesen einzuführen.

In einer einfachen Ausführungsform ist die Ladevorrichtung 2 eingerichtet, nur in Querrichtung y den Ladestecker 6 automatisch zum Ladeanschluss 5 zu bewegen und in diesen einzuführen. Alternativ kann die Ladevorrichtung 2 eingerichtet sein, den Ladestecker 6 automatisch in Längsrichtung x zur Verstellung des Ladesteckers 6 in Richtung des Ladeanschlusses 5 und in Querrichtung y zum Einführen des Ladesteckers 6 in den Ladeanschluss 5 zu bewegen. Zusätzlich kann die Ladevorrichtung 2 eingerichtet sein, den Ladestecker 6 automatisch in Hochrichtung z zu bewegen.

Im gezeigten Ausführungsbeispiel nach Figur 1 ist die Ladevorrichtung 2 eingerichtet, den Ladestecker 6 in drei Raumrichtungen 7.1 bis 7.3 in Richtung des Ladeanschlusses 5 zu bewegen.

Hierzu umfasst die Schleppkettenanordnung 4 je Raumrichtung 7.1 bis 7.3 jeweils eine zugehörige Schleppketteneinheit 4.1 bis 4.3 und die Steckerhalterung 8 für den Ladestecker 6, zum automatischen Aufnehmen, insbesondere Greifen, Fixieren und optionalen Lösen oder Freigeben des Ladesteckers 6.

Eine erste Schleppketteneinheit 4.1 ist eingerichtet, den Kabelsatz 3 in Längsrichtung x hin und her zu bewegen. Eine zweite Schleppketteneinheit 4.2 ist eingerichtet, den Kabelsatz 3 in Hochrichtung z hoch und runter zu bewegen. Eine dritte Schleppketteneinheit 4.3 ist eingerichtet, den Kabelsatz 3 in Querrichtung y hin und her zu bewegen.

Die dritte Schleppketteneinheit 4.3 kann an der zweiten Schleppketteneinheit 4.2 oder der ersten Schleppketteneinheit 4.1 angeordnet sein. Die zweite Schleppketteneinheit 4.2 kann an der ersten Schleppketteneinheit 4.1 oder an der dritten Schleppketteneinheit 4.3 angeordnet sein. Die Steckerhalterung 8 ist an der dritten Schleppketteneinheit 4.3 angeordnet. Die jeweiligen Schleppketteneinheiten 4.1 bis 4.3 sind relativ zueinander beweglich angeordnet und gelagert.

Beispielsweise ist die zweite Schleppketteneinheit 4.2 auf Mitnahme an der ersten Schleppketteneinheit 4.1 für eine gemeinsame Verstellung in Längsrichtung x befestigt. Die dritte Schleppketteneinheit 4.3 ist auf Mitnahme an der zweiten Schleppketteneinheit 4.2 für eine Verstellung in Hochrichtung z befestigt und über diese zweite Schleppketteneinheit 4.2 auf Mitnahme mit der ersten Schleppketteneinheit 4.1 für eine Verstellung in Längsrichtung x gekoppelt. Die dritte Schleppketteneinheit 4.3 ist zusätzlich relativ bewegbar zur zweiten Schleppketteneinheit 4.2 und zur ersten Schleppketteneinheit 4.1 für eine Verstellung in Querrichtung y angeordnet.

Die Steckerhalterung 8 ist zum Einführen des Ladesteckers 6 in den Ladeanschluss 5 eingerichtet. Hierzu ist die dritte Schleppketteneinheit 4.3, an welcher die Steckerhalterung 8 befestigt ist, relativ bewegbar zur zweiten Schleppketteneinheit 4.2 und zur ersten Schleppketteneinheit 4.1 für eine Verstellung in Querrichtung y angeordnet. Insbesondere ist die starre oder feste, Steckerhalterung 8 beweglich an der dritten Schleppketteneinheit 4.3, zum Beispiel mittels eines Linear-Aktuators, eines Winkel-Aktuators, eines Drehgelenks, eines Kugelgelenks oder dergleichen, angeordnet.

Der Ladestecker 6 ist noch fest oder starr mit der Steckerhalterung 8 verbunden. Zum Ausgleich von geringen Fahrzeugbewegungen ist die Steckerhalterung 8 eingerichtet, den Ladestecker 6 freizugeben, so dass dieser einerseits in dem Ladeanschluss 5 gesteckt ist und andererseits mit der als Ladestation ausgebildeten Ladevorrichtung 2 verbunden ist.

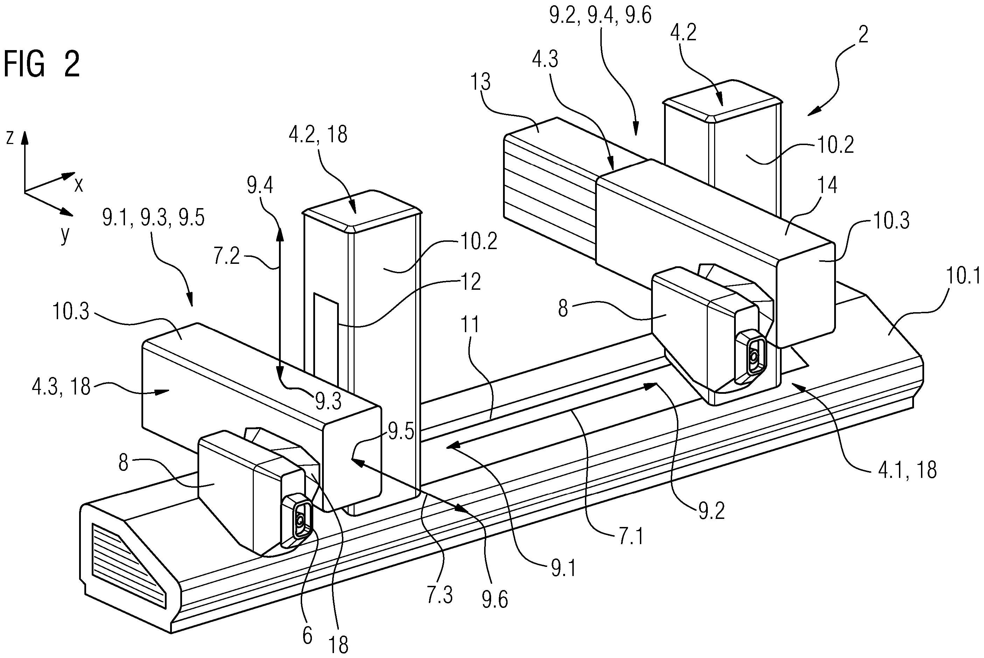

Figur 2 zeigt schematisch in perspektivischer Darstellung die Ladevorrichtung 2 gemäß Figur 1.

Figur 2 zeigt die Ladevorrichtung 2, insbesondere die erste Schleppketteneinheit 4.1, in ihren zwei Endpositionen 9.1, 9.2, zwischen denen der Ladestecker 6 an eine beliebige Position in Längsrichtung x in die erste Raumrichtung 7.1 bewegt werden kann. Des Weiteren zeigt die Figur 2 die zweite Schleppketteneinheit 4.2 in ihren zwei Endpositionen 9.3 und 9.4, zwischen denen der Ladestecker 6 an eine beliebige Position in Hochrichtung z in die zweite Raumrichtung 7.2 bewegt werden kann. Die dritte Schleppketteneinheit 4.3 ist ebenfalls in ihren zwei Endpositionen 9.5 und 9.6 dargestellt, zwischen denen der Ladestecker 6 an eine beliebige Position in Querrichtung y in die dritte Raumrichtung 7.3 bewegt werden kann.

Bevorzugt wird die Steckerhalterung 8 mittels der Schleppkettenanordnung 4 in Richtung des Ladeanschlusses 5 bewegt und bei Erreichen der Längsposition des Ladeanschlusses 5 relativ zu diesem Ladeanschluss 5 ausgerichtet, um anschließend automatisch den Ladestecker 6 in den Ladeanschluss 5 einzuführen oder von diesem zu lösen oder zu entkoppeln.

Optional kann die Steckerhalterung 8 selbst beweglich gelagert sein und relativ zum Ladeanschluss 5 (dargestellt in Figur 1) ausgerichtet und in den Ladeanschluss 5 gesteckt oder von diesem wieder gelöst oder entkopppelt werden.

Die jeweilige Schleppketteneinheit 4.1 bis 4.3 umfasst ein Gehäuse 10.1 bis 10.3.

Zur Längsverstellung des Ladesteckers 6 ist die Steckerhalterung 8 über die miteinander beweglich gekoppelten Schleppketteneinheiten 4.2 und 4.3 in einer Längsausnehmung 11 des Gehäuses 10.1 der ersten Schleppketteneinheit 4.1 längsverstellbar angeordnet.

Zur Hochverstellung der Ladevorrichtung 2, insbesondere des Ladesteckers 6, ist die dritte Schleppketteneinheit 4.3 in einer Vertikalausnehmung 12 des Gehäuses 10.2 der zweiten Schleppketteneinheit 4.2 vertikal verstellbar angeordnet.

Zur Querverstellung der Ladevorrichtung 2, insbesondere des Ladesteckers 6, kann die dritte Schleppketteneinheit 4.3 zusätzlich in Querrichtung y relativ zur zweiten Schleppketteneinheit 4.2 und/oder ersten Schleppketteneinheit 4.1 beweglich angeordnet sein. Hierzu kann das Gehäuse 10.3 in nicht näher dargestellter Art und Weise eine Querausnehmung in Richtung der zweiten Schleppketteneinheit 4.2 umfassen.

Jede der Schleppketteneinheiten 4.1 bis 4.3 kann eine zugehörige Verstelleinrichtung 18, zum Beispiel ein Schienensystem, ein Führungssystem mit einem Schlitten oder dergleichen, umfassen. Die Verstelleinrichtung 18 kann zum Beispiel Linear-Aktuatoren, Winkel-Aktuatoren, Drehgelenke und/oder Kugelgelenke umfassen. Durch Ansteuern der Verstelleinrichtung 18, insbesondere der Linear-Aktuatoren, Winkel-Aktuatoren, Drehgelenke und/oder Kugelgelenke, können die Schleppketteneinheiten 4.1 bis 4.3 unabhängig voneinander oder abhängig voneinander in eine oder mehrere der Raumrichtungen 7.1 bis 7.3 verstellt werden, wodurch wiederum die mit der Schleppketteneinheit 4.3 verbundene Steckerhalterung 8 vor einem Ladevorgang, während eines Ladevorgangs und/oder nach einem Ladevorgang den Ladestecker 6 bewegt und/oder die Position eines freigegebenen und gesteckten Ladesteckers 6 nachverfolgt und/oder der Ladestecker 6 in Bezug auf den Ladeanschluss 5 ausgerichtet werden kann.

Beispielsweise kann die jeweilige Verstelleinrichtung 18 eine ortsfeste Einheit 13, zum Beispiel eine feste Schiene oder eine feste Führung oder ein festes Gelenk, und eine bewegliche Einheit 14, zum Beispiel eine bewegliche Schiene oder einen Schlitten oder ein bewegliches Gelenk, umfassen. Die jeweilige Verstelleinrichtung 18, insbesondere deren bewegliche Einheit 14, ist mit einem nicht näher dargestellten Antrieb, insbesondere einem Motor, zum Beispiel einem Elektromotor, oder dergleichen, bewegungsgekoppelt.

Figur 3 zeigt schematisch in perspektivischer Darstellung ein Beispiel für die Steckerhalterung 8 mit gehaltenem, insbesondere an der Steckerhalterung 8 formschlüssig und/oder kraftschlüssig fixiertem, Ladestecker 6.

Die Steckerhalterung 8 ist eingerichtet, den Ladestecker 6 automatisch mit dem Ladeanschluss 5 am Elektrofahrzeug 1 (in Figur 1 dargestellt) zu verbinden oder zu lösen. Insbesondere ist die Steckerhalterung 8 eingerichtet, dass der Ladestecker 6 automatisch von der Steckerhalterung 8 gelöst/freigegeben werden kann, insbesondere dann, wenn der Ladestecker 6 in den Ladeanschluss 5 gesteckt ist.

Darüber hinaus kann die Steckerhalterung 8 eingerichtet sein, den Ladestecker 6 automatisch von dem Ladeanschluss 5 zu lösen und zu entkoppeln. Zum automatischen Lösen und Entkoppeln des Ladesteckers 6 von dem Ladeanschluss 5 ist der Ladestecker 6 an der Steckerhalterung 8 gehalten und lösbar fixiert.

Insbesondere ist die Steckerhalterung 8 eingerichtet, den nicht gesteckten Ladestecker 6 an der Steckerhalterung 8 zu halten. Darüber hinaus kann die Steckerhalterung 8 eingerichtet sein, den Ladestecker 6 beim Verbinden mit dem Ladeanschluss 5 weiterhin an der Steckerhalterung 8 zu halten und zu fixieren. Mit anderen Worten: Bei einer Bewegung der Steckerhalterung 8 in Richtung des Ladeanschlusses 5 zum Verbinden wird der Ladestecker 6 mitgenommen und in den Ladeanschluss 5 automatisch eingeführt.

Hierzu umfasst die Steckerhalterung 8 eine Koppeleinrichtung 15, die eingerichtet ist, den Ladestecker 6 lösbar zu halten und/oder lösbar zu fixieren. Beispielsweise kann die Koppeleinrichtung 15 eingerichtet sein, den Ladestecker 6 formschlüssig und/oder kraftschlüssig an der Steckerhalterung 8 zu halten und lösbar zu fixieren.

Beispielsweise kann die Koppeleinrichtung 15 eingerichtet sein, den Ladestecker 6 geklemmt, gespannt und/oder magnetisch oder mittels eines Seilzuges, insbesondere eines Fangseilzuges, oder dergleichen an der Steckerhalterung 8 lösbar zu halten und lösbar zu fixieren.

Dazu kann die Koppeleinrichtung 15 beispielsweise als eine Magneteinheit 16 ausgebildet sein, die zumindest ein Magnetelement 16.1 an der Steckerhalterung 8 und ein Gegenmagnetelement 16.2 an dem Ladestecker 6 aufweist. Zum Lösen des Ladesteckers 6 von der Steckerhalterung 8 können das Magnetelement 16.1 und das Gegenmagnetelement 16.2 entsprechend gesteuert und aktiviert oder deaktiviert werden.

Der Ladestecker 6 weist mindestens einen Ladesteckkontakt 6.1 für ein Ladekabel 17, das den Satz 3 von Kabeln umfasst (dargestellt in Figur 1), auf. Optional kann der Ladestecker 6 Zusatzsteckkontakte 6.2, 6.3 zum Beispiel für Schutzleiter, Kommunikationsleitungen, Signalleitungen, Steuerleitungen, Versorgungsleitungen oder dergleichen Leitungen, die zusätzlich im Satz 3 von Kabeln vorgesehen sind, aufweisen.

Die lösbare Kopplung von Steckerhalterung 8 und Ladestecker 6 ermöglicht, dass gegenüber bekannten festen Kopplungen von Steckerhalterung 8 und Ladestecker 6 Beschädigungen infolge von geringen Fahrzeugbewegungen beim Laden des Elektrofahrzeugs 1 vermieden werden können, da diese Bewegungen aufgrund der Entkopplung ausgeglichen werden können.

Figur 3 zeigt den Ladestecker 6 in seiner Ausgangsposition, in welcher der Ladestecker 6 an der Steckerhalterung 8 gehalten und fixiert ist.

Die Verstelleinrichtung/en 18 der Schleppkettenanordnung 4 kann/können die Steckerhalterung 8 insbesondere zwischen der Ausgangsposition, in welcher der Ladestecker 6 an der Steckerhalterung 8 lösbar fixiert und lösbar gehalten ist, und der Steckposition 20, in welcher der Ladestecker 6 in dem Ladeanschluss 5 eingeführt ist (dargestellt in Figur 1), entsprechend bewegen.

Das Bewegen oder Verstellen der Steckerhalterung 8 stellt sicher, dass bei Bewegungen des Elektrofahrzeugs 1, zum Beispiel während des Ladens des Elektrofahrzeugs 1, die Steckerhalterung 8 der Steckposition 20 des Ladesteckers 6 automatisch nachgeführt werden kann und/oder dass die Steckerhalterung 8 mit dem nicht gesteckten, aber an der Steckerhalterung 8 fixierten Ladestecker 6 (= Ausgangsposition) in Bezug auf den Ladeanschluss 5 ausgerichtet werden kann.

Figur 4 zeigt schematisch ein weiteres Beispiel der Steckerhalterung 8 mit alternativer lösbarer Koppeleinrichtung 15' für den Ladestecker 6, der in gelöster oder freigegebener Position dargestellt ist. Das heißt, der Ladestecker 6 ist von der Steckerhalterung 8 gelöst und freigegeben.

Die Koppeleinrichtung 15' ist beispielsweise als eine Klemmeinheit 21 mit verstellbaren Klemmelementen 22, insbesondere Klemmarmen, Klemmhaken oder dergleichen, ausgebildet, die beispielsweise eine formschlüssige Verbindung mit der Gegenseite ermöglichen. Der Ladestecker 6 umfasst als Gegenklemmelement 23 einen Klemmbügel 24.

Des Weiteren kann die Steckerhalterung 8 eine Überwachungseinheit 25 umfassen, die eingerichtet ist, einen gesteckten Ladestecker 6 hinsichtlich seiner Steckposition 20 (dargestellt in Figur 1) zu überwachen und/oder aufzufinden. Beispielsweise kann die Überwachungseinheit 25 zumindest eine Kamera 26 sein. Alternativ oder zusätzlich, nicht näher dargestellt, kann die Überwachungseinheit 25 auch eine funkbasierte Ausrichteinheit, zum Beispiel eine Nahbereichsfunklokalisierungseinheit auf Ultra-Breitband-Basis (auch kurz UWB Basis mit UWB = Ultra-Wideband), oder eine Näherungssensoreinheit umfassen.

Insbesondere können zwei getrennte Kameras 26 oder zwei getrennte Bilderkennungssysteme vorgesehen sein: eine der Kameras 26 kann zum Identifizieren des Ladeanschlusses 5 (auch Ladebuchse genannt) und die andere Kamera 26 zum Wiederfinden des Ladesteckers 6 vorgesehen sein.

Die Kamera/s 26 kann/können beispielsweise eingerichtet sein, eine Markierung oder ein Muster an dem Ladeanschluss 5 für den Ladestecker 6 und/oder an dem Ladestecker 6 selbst zu erfassen und zu erkennen. Mittels eines Algorithmus werden Kamerabilder und optional deren Verzerrungen bestimmt und anhand derer die Steckposition 20 des gesteckten Ladesteckers 6 ermittelt. Hierdurch ist ein Wiederauffinden und Nachverfolgen des im Ladeanschluss 5 gesteckten und von der Steckerhalterung 8 freigegebenen Ladesteckers 6 auch bei Bewegungen des zu ladenden Elektrofahrzeugs 1 ermöglicht.

Zusätzlich kann/können die Kamera/s 26 beispielsweise eingerichtet sein, die Anschlussposition eines freien Ladeanschlusses 5 zum automatischen Verbinden des Ladesteckers 6 mit dem freien Ladeanschluss 5 (dargestellt in Figur 1) zu ermitteln. Die Kamera/s 26 ermöglicht/en eine Nachregelung und eine visuelle Erkennung.

Die jeweilige Position, insbesondere die Steckposition 20 und/oder die Anschlussposition, kann in Koordinaten umgewandelt werden, anhand welcher dann die Steckerhalterung 8 zum automatischen Ausrichten und Verbinden des Ladesteckers 6 mit dem freien Ladeanschluss 5 oder zum Auffinden und Lösen des gesteckten Ladesteckers 6 von dem Ladeanschluss 5 bewegt und/oder ausgerichtet wird.

Anstelle der Kamera 26 können andere Überwachungseinheiten 25, zum Beispiel Sensoren zur Positionsbestimmung des Ladesteckers 6 und/oder des freien Ladeanschlusses 5, vorgesehen sein.

Nach dem automatischen Lösen oder Freigeben des Ladesteckers 6 von der Steckerhalterung 8 ist das Ladekabel 17 (dargestellt in Figur 3) maßgeblich an der als Ladestation oder Laderoboter ausgebildeten Ladevorrichtung 2 gehalten. Hierdurch können geringe Fahrzeugbewegungen beim Laden des Elektrofahrzeugs 1 durch das frei hängende Ladekabel 17 ausgeglichen werden.

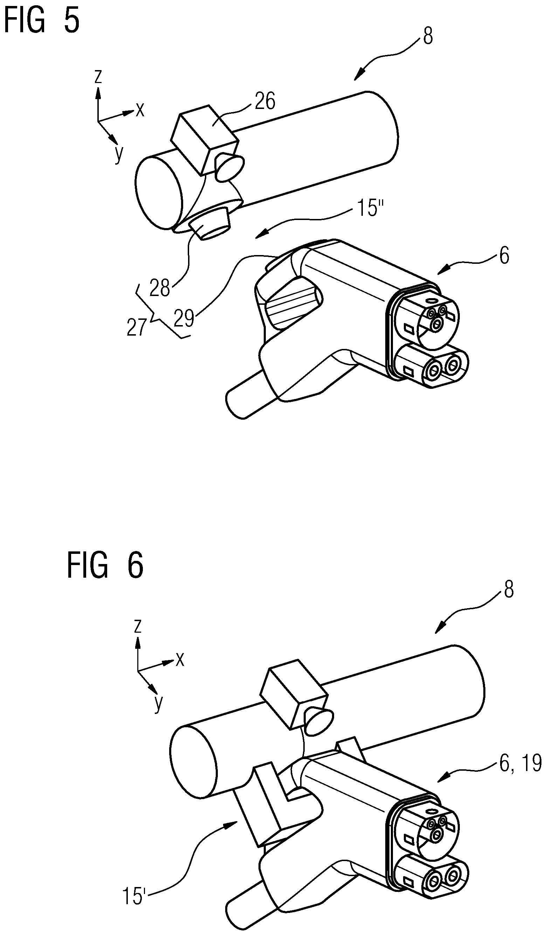

Figur 5 zeigt schematisch ein weiteres Beispiel der Steckerhalterung 8 mit einer weiteren alternativen lösbaren Koppeleinrichtung 15'' für den Ladestecker 6, der in einer freien oder gelösten Position gestellt ist.

Die Koppeleinrichtung 15'' ist beispielsweise als eine Spanneinheit 27 mit einem Spannbolzen 28 an der Steckerhalterung 8 und einer Spannaufnahme 29 am Ladestecker 6 angeordnet.

Anstelle der zuvor beschriebenen Koppeleinrichtungen 15, 15' und 15'' können auch andere Einrichtungen zum Lösen und Fixieren vorgesehen sein, wie zum Beispiel ein Greifer, ein Nullpunktspannsystem, ein Sperrbolzen, eine Magnetverriegelung oder dergleichen.

Figur 5 zeigt ebenfalls zur Nachverfolgung der Bewegung eines gesteckten Ladesteckers 6 als Überwachungseinheit 25 die Kamera 26.

Figur 6 zeigt schematisch in perspektivischer Darstellung die Steckerhalterung 8 mit dem an dieser fixierten Ladestecker 6. Der Ladestecker 6 ist in seiner Ausgangsposition an der Steckerhalterung 8 mittels der Koppeleinrichtung 15 gehalten und fixiert. In dieser gekoppelten Position ist der "nicht gesteckte" Ladestecker 6 mittels der bewegbaren Steckerhalterung 8 in Bezug auf den Ladeanschluss 5 ausrichtbar und in diesen automatisch einsteckbar.

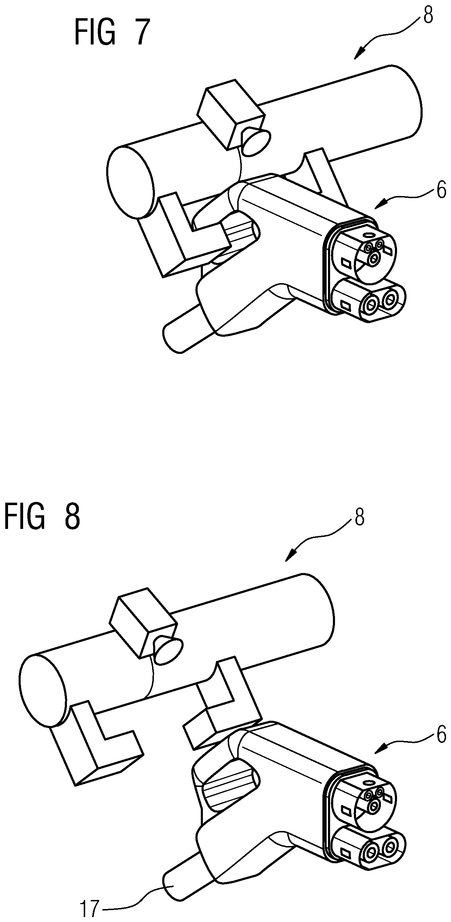

Figur 7 zeigt schematisch in perspektivischer Darstellung die Steckerhalterung 8 mit gelöstem Ladestecker 6 nach dem Koppeln mit dem Ladeanschluss 5 (hier zur besseren Übersicht nicht gezeigt, aber in Figuren 1 und 2 gezeigt). Hierzu ist die Steckerhalterung 8 eingerichtet, nach einem Verbinden des Ladesteckers 6 mit dem Ladeanschluss 5 den gesteckten Ladestecker 6 freizugeben oder loszulassen.

Figur 8 zeigt schematisch in perspektivischer Darstellung die Steckerhalterung 8 mit gelöstem und damit freiem Ladestecker 6. Der Ladestecker 6 ist von der Steckerhalterung 8 entkoppelt und während des Ladens in dem Ladeanschluss 5 (nicht dargestellt) gesteckt gehalten. Durch diese Entkopplung und Aufhebung der starren Verbindung von Steckerhalterung 8 und Ladestecker 6 und durch die Flexibilität des Ladekabels 17 können Fahrzeugbewegungen während des Ladens des Elektrofahrzeugs 1 in einfacher Art und Weise ausgeglichen werden. Bei einer Ausführung der Koppeleinrichtung 15 als ein Fangseilzugmechanismus kann der Ladestecker 6 noch zusätzlich an dem Fangseil hängen.

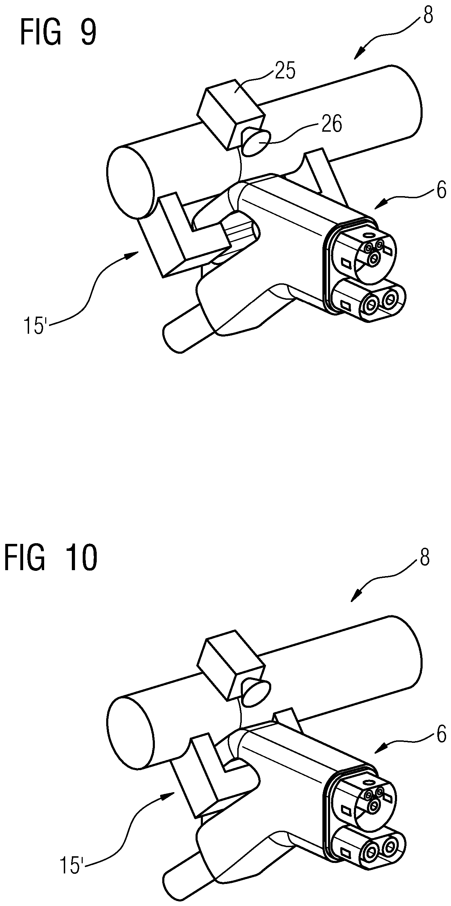

Figur 9 zeigt schematisch in perspektivischer Darstellung die Steckerhalterung 8 nach dem Laden und beim Einfangen oder Wiederauffinden des noch am Ladeanschluss 5 (dargestellt in Figur 1) gesteckten Ladesteckers 6. Mittels der beispielsweise als Kamera 26 ausgebildeten Überwachungseinheit 25 wird eine mögliche Bewegung des von der Steckerhalterung 8 entkoppelten und in den Ladeanschluss 5 gesteckten Ladesteckers 6 überwacht und nachverfolgt. Kam es zu einer solchen Bewegung wird die Steckerhalterung 8 automatisch mittels der Verstelleinrichtung 18 in Richtung des gesteckten Ladesteckers 6 nachgeführt und in Bezug auf diesen gesteckten Ladestecker 6 ausgerichtet - dieser Vorgang wird auch Auffinden und Wiedereinfangen genannt. Anschließend wird der Ladestecker 6 von der Steckerhalterung 8, insbesondere der Koppeleinrichtung 15, gegriffen und vom Ladeanschluss 5 abgezogen und somit von diesem entkoppelt.

Figur 10 zeigt schematisch in perspektivischer Darstellung die Steckerhalterung 8 mit wieder fixiertem Ladestecker 6.

Nach dem Greifen des Ladesteckers 6 und Entkoppeln des Ladesteckers 6 von dem Ladeanschluss 5 wird der Ladestecker 6 mittels der Koppeleinrichtung 15 wieder lösbar mit der Steckerhalterung 8 verbunden.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

Unabhängig vom grammatikalischen Geschlecht eines bestimmten Begriffs sind Personen mit männlicher, weiblicher oder anderer Geschlechteridentität mit umfasst.

### Bezugszeichenliste

- 1: Elektrofahrzeug
- 2: Ladevorrichtung
- 3: Satz von Kabeln (Kabelsatz)
- 4: Schleppkettenanordnung
- 4.1 bis 4.3: Schleppketteneinheit
- 5: Ladeanschluss
- 6: Ladestecker
- 6.1: Ladesteckkontakt
- 6.2, 6.3: Zusatzsteckkontakte
- 7.1 bis 7.3: Raumrichtung
- 8: Steckerhalterung
- 9.1 bis 9.6: Endposition
- 10.1 bis 10.3: Gehäuse
- 11: Längsausnehmung
- 12: Vertikalausnehmung
- 13: ortsfeste Einheit
- 14: bewegliche Einheit
- 15, 15', 15'': Koppeleinrichtung
- 16: Magneteinheit
- 16.1: Magnetelement
- 16.2: Gegenmagnetelement
- 17: Ladekabel
- 18: Verstelleinrichtung
- 20: Steckposition
- 21: Klemmeinheit
- 22: Klemmelement
- 23: Gegenklemmelement
- 24: Klemmbügel
- 25: Überwachungseinheit
- 26: Kamera
- 27: Spanneinheit
- 28: Spannbolzen
- 29: Spannaufnahme

- x: Längsrichtung
- y: Querrichtung
- z: Hochrichtung

## Patentansprüche

1. Ladevorrichtung (2) zum Laden eines Elektrofahrzeugs (1) mit elektrischer Energie mittels eines Ladekabels (17) mit einem endseitig angeordneten Ladestecker (6), der mit einem Ladeanschluss (5) an dem zu ladenden Elektrofahrzeug (1) verbindbar ist,
**gekennzeichnet durch** eine Steckerhalterung (8), die eingerichtet ist, den Ladestecker (6) automatisch mit dem Ladeanschluss (5) zu verbinden oder im verbundenen Zustand automatisch zu lösen.

2. Ladevorrichtung (2) nach Anspruch 1,
**dadurch gekennzeichnet, dass** die Steckerhalterung (8) eingerichtet ist, einen nicht gesteckten Ladestecker (6) an der Steckerhalterung (8) zu halten.

3. Ladevorrichtung (2) nach Anspruch 1 oder 2,
**dadurch gekennzeichnet, dass** die Steckerhalterung (8) eingerichtet ist, den Ladestecker (6) beim Verbinden mit dem Ladeanschluss (5) an der Steckerhalterung (8) zu halten.

4. Ladevorrichtung (2) nach einem der vorhergehenden Ansprüche,
**dadurch gekennzeichnet, dass** die Steckerhalterung (8) eingerichtet ist, nach einem Verbinden des Ladesteckers (6) mit dem Ladeanschluss (5) den gesteckten Ladestecker (6) freizugeben.

5. Ladevorrichtung (2) nach einem der vorhergehenden Ansprüche,
**gekennzeichnet durch** eine Verstelleinrichtung (18) und eine Überwachungseinheit (25), die miteinander wechselwirken und eingerichtet sind, einen verbundenen und freigegebenen Ladestecker (6) zu überwachen.

6. Ladevorrichtung (2) nach Anspruch 5,
**dadurch gekennzeichnet, dass** die Verstelleinrichtung (18) und die Überwachungseinheit (25) miteinander wechselwirken und eingerichtet sind, den am Ladeanschluss (5) gesteckten und freigegebenen Ladestecker (6) zu folgen.

7. Ladevorrichtung (2) nach einem der vorhergehenden Ansprüche,
**dadurch gekennzeichnet, dass** die Steckerhalterung (8) eingerichtet ist, den gesteckten Ladestecker (6) aufzunehmen oder zu greifen und vom Ladeanschluss (5) zu lösen oder zu ziehen.

8. Ladevorrichtung (2) nach einem der vorhergehenden Ansprüche,
**dadurch gekennzeichnet, dass** die Steckerhalterung (8) eine Koppeleinrichtung (15, 15', 15'') umfasst, die eingerichtet ist, den Ladestecker (6) lösbar zu halten und/oder zu fixieren.

9. Ladevorrichtung (2) nach Anspruch 8,
**dadurch gekennzeichnet, dass** die Koppeleinrichtung (15, 15', 15'') eingerichtet ist, den Ladestecker (6) formschlüssig und/oder kraftschlüssig zu halten und zu fixieren.

10. Ladevorrichtung (2) nach einem der vorhergehenden Ansprüche,
**dadurch gekennzeichnet, dass** die Steckerhalterung (8) eine Überwachungseinheit (25) umfasst, die eingerichtet ist, einen gesteckten Ladestecker (6) hinsichtlich seiner Steckposition (20) zu überwachen und/oder aufzufinden.

11. Ladevorrichtung (2) nach einem der vorhergehenden Ansprüche,
**dadurch gekennzeichnet, dass** die Steckerhalterung (8) zwischen einer Ausgangsposition und einer Steckposition (20) bewegbar ausgebildet ist.
